# EUROPEAN PATENT SPECIFICATION

(11) **EP 3 584 783 B1**
(45) Date of publication and mention of the grant of the patent: **03.03.2021**
(21) Application number: 17904137.1
(22) Date of filing: 11.12.2017
(51) Int. Cl.: G09F 9/30, H04M 1/02, H04M 1/22, G06F 1/16, G02F 1/1335, F21S 8/00, G02F 1/13357

(54) **LIGHT-EMITTING DEVICE AND MOBILE TERMINAL**
LICHTEMITTIERENDE VORRICHTUNG UND MOBILES ENDGERÄT
DISPOSITIF ÉMETTEUR DE LUMIÈRE ET TERMINAL MOBILE

(30) Priority: 31.03.2017 CN 201720335271 U
(43) Date of publication of application: 25.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yugui, Dongguan Guangdong 523860 (CN); CHENG, Jiao, Dongguan Guangdong 523860 (CN)
(74) Representative: Mewburn Ellis LLP
(86) International application number: PCT/CN2017/115421
(87) International publication number: WO 2018/176909

(56) References cited:
- CN-A- 103 885 639
- CN-A- 105 448 865
- CN-A- 107 093 659
- CN-U- 203 386 009
- CN-U- 205 787 490
- CN-U- 206 594 964
- US-A1- 2006 007 059
- US-A1- 2014 132 553
- US-A1- 2014 354 558
- US-A1- 2015 085 220
- US-A1- 2016 165 697
- US-A1- 2016 282 540
- US-A1- 2017 031 170

## Description

### TECHNICAL FIELD

This disclosure relates to the field of electronic devices, and particularly to a light-emitting device and a mobile terminal.

### BACKGROUND

With the rapid development of mobile terminals such as smartphones, the ordinary mobile terminals are no longer sufficient for the requirements of consumers. A mobile terminal having a flexible screen is a trend in the future. Light-emitting elements of the existing flexible screen are point light sources and fixedly installed. During bending the flexible screen, the light-emitting elements may be completely or partially covered by the flexible screen bent, resulting in low illumination brightness and a narrow illumination range of the light-emitting elements, and even poor illumination effect.

According to the present disclosure, a light-emitting device and a mobile terminal are provided to increase illumination brightness and an illumination angle.

CN 205787490 U relates to a backlight module including a light guide plate and a backlight. The light guide plate includes a first light guide plate and a second light guide plate stacked with the first light guide plate. The first light guide plate has a first surface close to the second light guide plate, and the second light guide plate has a second surface away from the first light guide plate. The backlight includes at least one light-emitting unit electrically coupled with each other, and the at least one light-emitting unit is bound on the first surface of the first light guide plate.

US 2016165697 A1 relates to a foldable display device adapted to minimize waviness caused by being folded and then unfolded. The foldable display device includes a display panel, a flexible film and an adhesion layer interposed between the display panel and the flexible film. The adhesion layer is partially removed from a fold area of the foldable display device.

US 2014354558 A1 relates to a flexible touch screen panel including a flexible film, and a wiring layer in the flexible film. The wiring layer is at a neutral plane within the flexible film, the neutral plane is a region where substantially no stress is applied when the flexible touch screen panel is bent.

US 2017031170 A1 relates to a display apparatus including a backlight assembly configured to emit light, and a display panel configured to display a two-dimensional (2D) image or a three-dimensional (3D) image using the light. The backlight assembly includes a first backlight unit configured to emit light for creating the 2D image, a second backlight unit configured to emit light for creating the 3D image, and a first polarizing panel disposed between the first backlight unit and the second backlight unit and configured to prevent at least a portion of leakage light leaking from the second backlight unit from being incident to the second backlight unit.

### SUMMARY

According to the present disclosure, a light-emitting device and a mobile terminal are provided to increase illumination brightness and an illumination angle.

According to the present disclosure, a light-emitting device as set out in claim 1 is provided. The light-emitting device includes a flexible screen, a flexible screen support member, and a surface light source. The flexible screen includes an exit light surface and an incident light surface opposite the exit light surface. The surface light source is attached to the incident light surface and configured to emit light, and the light emitted by the surface light source passes through the incident light surface and exits from the exit light surface. The flexible screen support member includes a first end and a second end opposite the first end, and the flexible screen support member, the flexible screen, and the surface light source are stacked together. The flexible screen support member is disposed at a side of the surface light source away from the flexible screen, or the flexible screen support member is disposed between the surface light source and the flexible screen. Bending of the flexible screen support member enables the first end and the second end to be close to each other. The first end and the second end are respectively provided with engaging members being able to be engaged with each other, enabling the first end and the second end to be engaged with each other via the engaging members.

According to the present disclosure, a mobile terminal is further provided. The mobile terminal includes the above-mentioned light-emitting device.

According to the present disclosure, the light-emitting device and the mobile terminal are provided. The light-emitting device includes the flexible screen. The surface light source is arranged below the flexible screen, such that a light-emitting area of the flexible screen illumination source is increased, and a problem of low brightness of emitted light and a narrow illumination range can be resolved, where the problem is generated by that a light source is covered during bending the flexible screen. Thus, the illumination function of the light-emitting device is not affected by a variation in the shape of the flexible screen. Further, the surface light source is enabled to form a curved surface light source during bending the flexible screen, such that the illumination range of the mobile terminal is further increased, thereby increasing the application scenarios of the mobile terminal.

### BRIEF DESCRIPTION OF THE DRAWINGS

To describe technical solutions of the present disclosure more clearly, the following briefly introduces the accompanying drawings required for describing the embodiments. Apparently, the accompanying drawings in the following description only illustrate some embodiments of the present disclosure. Those of ordinary skill in the art may also obtain other drawings based on these accompanying drawings without creative efforts.
FIG 1 is an exploded schematic structural view of a light-emitting device according to a first embodiment of the present disclosure.
FIG 2 is a top view of the light-emitting device according to the first embodiment of the present disclosure.
FIG 3 is another exploded schematic structural view of the light-emitting device according to the first embodiment of the present disclosure.
FIG 4 is a schematic view illustrating a light-emitting effect of a first light-emitting device bent according to the present disclosure.
FIG 5 is a schematic view illustrating a light-emitting effect of a second light-emitting device bent according to the present disclosure.
FIG 6 is a schematic view illustrating a light-emitting effect of a third light-emitting device bent according to the present disclosure.
FIG 7 is a partial schematic structural view of a surface light source of a light-emitting device according to an embodiment of the present disclosure.
FIG 8 is a partial schematic structural view of a surface light source of a light-emitting device according to an embodiment of the present disclosure.
FIG 9 is a partial schematic structural view of a surface light source of a light-emitting device according to an embodiment of the present disclosure.
FIG 10 is an exploded schematic structural view of a light-emitting device according to a second embodiment of the present disclosure.
FIG 11 is a schematic structural view of a flexible screen support member of a light-emitting device according to an embodiment of the present disclosure.
FIG 12 is a schematic cross-sectional view of engaging members taken along AA' of FIG 11.
FIG 13 is a schematic structural view of a mobile terminal according to an embodiment of the present disclosure.
FIG 14 is an exploded schematic structural view of a mobile terminal according to an embodiment of the present disclosure.

### DETAILED DESCRIPTION

In order to appreciate the above objects, features, and advantages of the present disclosure more clearly, the present disclosure will be described in detail hereinafter with reference to the accompanying drawings and the specific embodiments. It is noted that the embodiments of the present disclosure and the features in the embodiments can be mutually combined in a condition without inconsistency.

In the following description, various specific details are elaborated to fully appreciate the present disclosure. The described embodiments are merely some rather than all embodiments of the present disclosure.

A light-emitting device 100 as set out in claim 1 is provided. The light-emitting device 100 includes a flexible screen 101, a flexible screen support member 102, and a surface light source 103. The flexible screen 101 includes an exit light surface 1011 and an incident light surface 1012 opposite the exit light surface 1011. The surface light source 103 is attached to the incident light surface 1012 and configured to emit light. The light emitted by the surface light source 103 passes through the incident light surface 1012 and exits from the exit light surface 1011, so as to achieve illumination. The flexible screen support member 102 includes a first end 1021 and a second end 1022 opposite the first end 1021. The flexible screen support member 102, the flexible screen 101, and the surface light source 103 are stacked together. The flexible screen support member 102 is disposed at a side of the surface light source 10 away from the flexible screen 101, or the flexible screen support member 102 is disposed between the surface light source 103 and the flexible screen 101. Bending of the flexible screen support member 102 enables the first end 1021 and the second end 1022 to be close to each other. The first end 1021 and the second end 1022 are respectively provided with engaging members 1023 being able to be engaged with each other, enabling the first end 1021 and the second end 1022 to be engaged with each other via the engaging members 1023. The flexible screen 101 is made from a transparent material or a translucent material. In an embodiment, the flexible screen 101 is made from the transparent material, and the flexible screen 101 has good light transmittance, such that the light emitted by the surface light source 103 is transmitted out of the flexible screen 101 to increase brightness of the light-emitting device 100.

According to the present disclosure, the light-emitting device 100 is provided. The surface light source 103 is arranged below the flexible screen 101, such that a light-emitting area of the flexible screen illumination source is increased, and a problem of low brightness of emitted light and a narrow illumination range can be resolved, where the problem is generated by that a light source is covered during bending the flexible screen 101. Thus, the illumination function of the light-emitting device 100 is not affected by a variation in the shape of the flexible screen 101. Further, the surface light source 103 is enabled to form a curved surface light source during bending the flexible screen 101, such that the illumination range of the flexible screen 101 is further increased, thereby increasing the application scenarios of the flexible screen 101. The flexible display can be applied to a poor illumination environment, bringing convenience for people's life.

### First embodiment

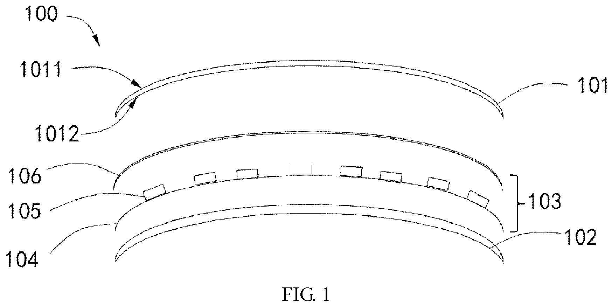

Referring to FIG 1, the light-emitting device 100 includes the flexible screen support member 102. The flexible screen support member 102, the flexible screen 101, and the surface light source 103 are stacked together. The flexible screen support member 102 is disposed at a side of the surface light source 103 away from the flexible screen 101. The flexible screen support member 102 supports the flexible screen 101 and the surface light source 103, such that the shape of the flexible screen 101 and the shape of the surface light source 103 vary following the variation in the shape of the flexible screen support member 102.

In this embodiment, the surface light source 103 is attached to the flexible screen support member 102, such that the shape of the surface light source 103 varies following the variation in the shape of the flexible screen support member 102.

In this embodiment, the flexible screen support member 102 is bendable. The flexible screen support member 100 can be bent to be in a C-shape or an S-shape, enabling the flexible screen 101 and the surface light source 103 to be bent to be in a C-shape or an S-shape.

In one embodiment, referring to FIG 1, the surface light source 103 includes a flexible circuit board 104 and multiple surface-mount device light-emitting diodes (SMD LEDs) 105 attached to the flexible circuit board 104. The multiple SMD LEDs 105 are disposed at a side of the flexible circuit board 101 close to the flexible screen 101, such that light emitted from the multiple SMD LEDs 105 can exit from the flexible screen 101.

In another embodiment, the surface light source 103 may also be an organic light-emitting diode (OLED) light source or the like.

In one example, the brightness of the surface light source 103 varies during switching the flexible screen 101 from flattened status to bent status.

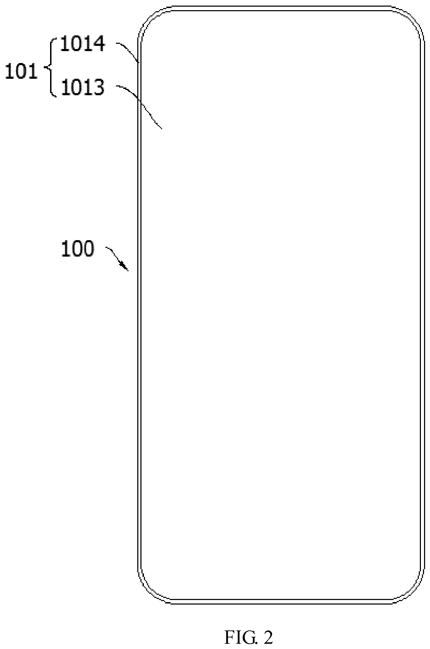

In one example, referring to FIG 2, the flexible screen 101 includes a display region 1013 and a non-display region 1014 surrounding the display region 1013. A ratio of an area of the display region 1013 to an area of the non-display region 1014 is greater than 4:1.

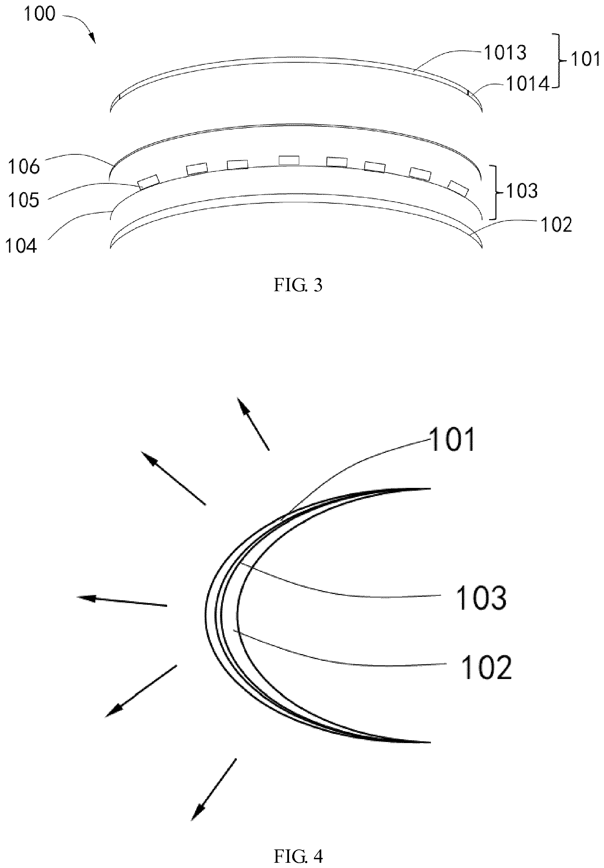

In one embodiment, referring to FIG 3, a projection of the display region 1013 of the flexible screen 101 in a direction toward the surface light source 103 falls on the surface light source 103, such that the whole display region 1013 of the flexible screen 101 is a light-emitting surface, thereby increasing the light-emitting area of the flexible screen 101.

In this embodiment, the surface light source 103 may be bent following bending of the flexible screen support member 102 and the flexible screen 101, and the bending enables the flexible screen 101 to form a curved-surface light-emitting screen, thereby increasing an illumination angle of an illumination source on the flexible screen 101. The flexible screen support member 102 is bendable and can be bent to be in any shape, such that the light-emitting device 100 can also be bent to be in any shape. Various bending shapes of the flexible screen support member 102 enable the adjustment of the illumination angle and the illumination angle of the light-emitting device 100. Three embodiments are embodied hereinafter according to the present disclosure for explanations.

In a first embodiment, referring to FIG 4, the light-emitting device 100 is bent outward. Specifically, two ends of the flexible screen support member 102 are enabled to be close to each other, such that a central portion of the flexible screen support member 102 extends toward a side where the exit light surface 1011 locates. The flexible screen 101 and the surface light source 103 are bent together with the flexible screen support member 102, enabling the light-emitting device 100 to be a convex surface light source and the light emitted is diverged, thereby increasing the illumination angle.

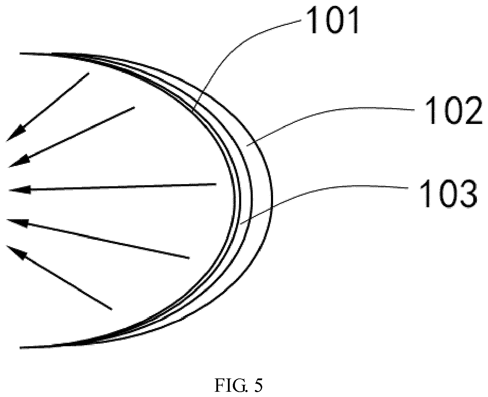

In a second embodiment, referring to FIG 5, the light-emitting device 100 is bent inward. Specifically, the two ends of the flexible screen support member 102 are enabled to be close to each other, such that the central portion of the flexible screen support member 102 extends toward a side where the incident light surface 1012 locates. The flexible screen 101 and the surface light source 103 are bent together with the flexible screen support member 102, enabling the light-emitting device 100 to be a concave surface light source, and the light emitted is concentrated, thereby increasing the illumination brightness.

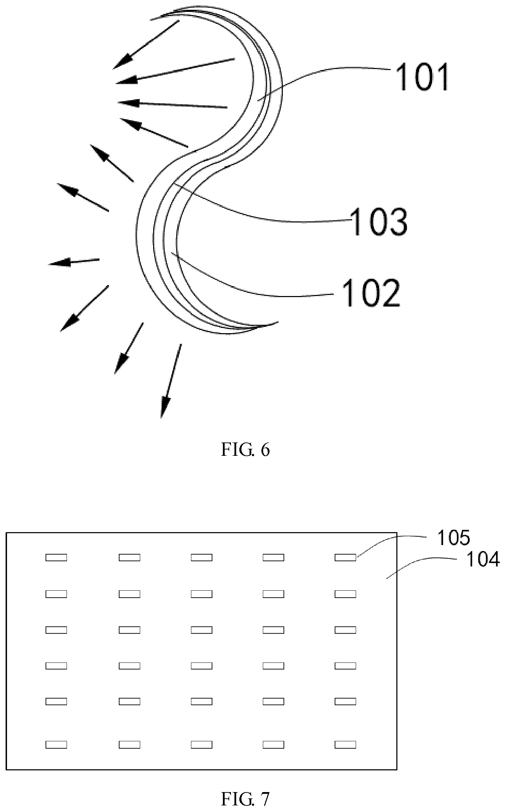

In a third embodiment, referring to FIG 6, the light-emitting device 100 is bent in an S-shape. The flexible screen 101 and the surface light source 103 are bent together with the flexible screen support member 102, enabling the light-emitting device 100 to be a light-emitting surface having a concave surface and a convex surface, and thus part of the light emitted is concentrated and the other of the light emitted is diverged, thereby increasing the illumination angle and the illumination brightness.

It can be understood that the light-emitting device 100 can also be bent in other shapes to control the illumination brightness and the illumination angle of the light-emitting device 100, such that the light-emitting device 100 can be applied to various application scenarios. The shape of the light-emitting device 100 after bending is not limited herein.

Referring to FIG 1, in a case that the flexible screen support member 102 is disposed at the side of the surface light source 103 away from the flexible screen 101, the surface light source 103 further includes a light guide plate 106. The light guide plate 106 is disposed between the multiple SMD LEDs 105 and the flexible screen 101 to enable the illumination of light emitted from the flexible screen 101 uniform.

In this embodiment, referring to FIG 1, the light guide plate 106 is bendable. The light guide plate 106 is bent following the bending of the flexible screen support member 102 during bending the flexible screen support member 102.

Further, referring to FIG 1, the light guide plate 106 and the flexible screen support member 102 are both made from the heat-dissipating materials to facilitate the diffusion of heat generated by the surface light source 103. In other embodiments, in a case that the light-emitting device 100 is applied to a mobile terminal, the light-emitting device 100 further includes a heat dissipating member disposed around the surface light source 103. The heat-dissipating member is connected to the surface light source 103 and a casing of the mobile terminal to facilitate heat dissipation of the surface light source 103.

Referring to FIG 7, the surface light source 103 includes the flexible circuit board 104 and the multiple SMD LEDs 105 attached to the flexible circuit board 104. The multiple SMD LEDs 105 are evenly laid on the flexible circuit board 104 to enable the illumination of the flexible screen 101 uniform. The multiple SMD LEDs 105 can be arranged in an array on the flexible circuit board 104. In other embodiments, the multiple SMD LEDs 105 can also be arranged around a central region of the flexible circuit board 104. Alternatively, the multiple SMD LEDs 105 can be randomly laid on the flexible circuit board 104, for example, the multiple SMD LEDs 105 are combined into LED strips, and the LED strips are attached to the flexible circuit board 104, or the like.

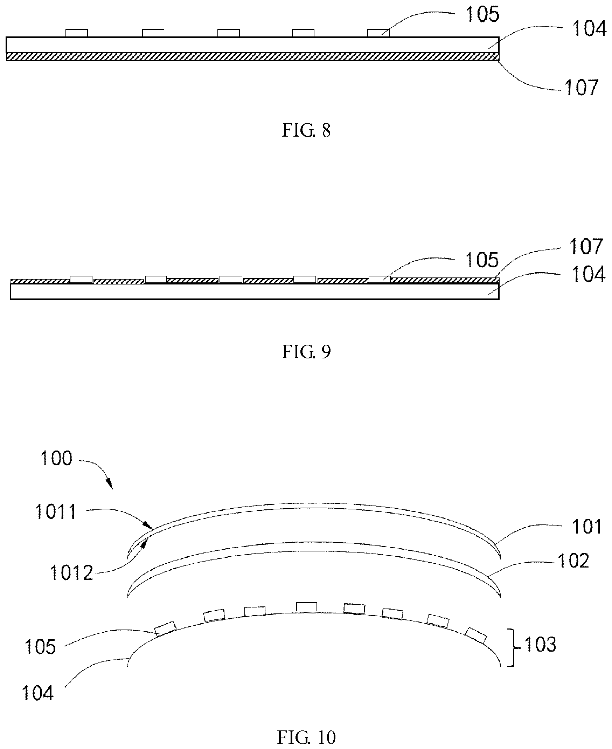

Referring to FIG 9, a light-reflecting layer 107 is further disposed between the multiple SMD LEDs 105 and the flexible circuit board 104, such that part of light from the multiple SMD LEDs 105 is emitted to the light-reflecting layer 107, and the part of light is reflected by the light-reflecting layer 107 and exits from the flexible screen 101. The light-reflecting layer 107 may be a metal coating layer arranged on the flexible circuit board 104. The light-reflecting layer 107 may coat part of the flexible circuit board 104, so as to avoid electronic circuits and the multiple SMD LEDs 105 on the flexible circuit board 104 and to prevent the electronic circuits and the multiple SMD LEDs 105 on the flexible circuit board 104 from being short.

Referring to FIG 8, in other embodiments, the flexible circuit board 104 may be made from a transparent material. The light-reflecting layer 107 can be disposed on a surface of the flexible circuit board 104 away from the multiple SMD LEDs 105.

### Second embodiment

Referring to FIG 10, the second embodiment is different from the first embodiment in that the flexible screen support member 102 is disposed between the surface light source 103 and the flexible screen 101. The flexible screen support member 102 supports the flexible screen 101, such that the shape of the flexible screen 101 and the shape of the surface light source 103 vary following the variation in the shape of the flexible screen support member 102.

In an embodiment, the flexible screen support member 101 is made from a light guide material. The flexible screen support member 101 can be used as a light guide plate of the surface light source 103, and thus there is no necessary to provide another light guide plate, thereby reducing a thickness of the light-emitting device 100 and simplifying a structure of the light-emitting device 100, and accordingly, manufacturing cost of the light-emitting device 100 is reduced.

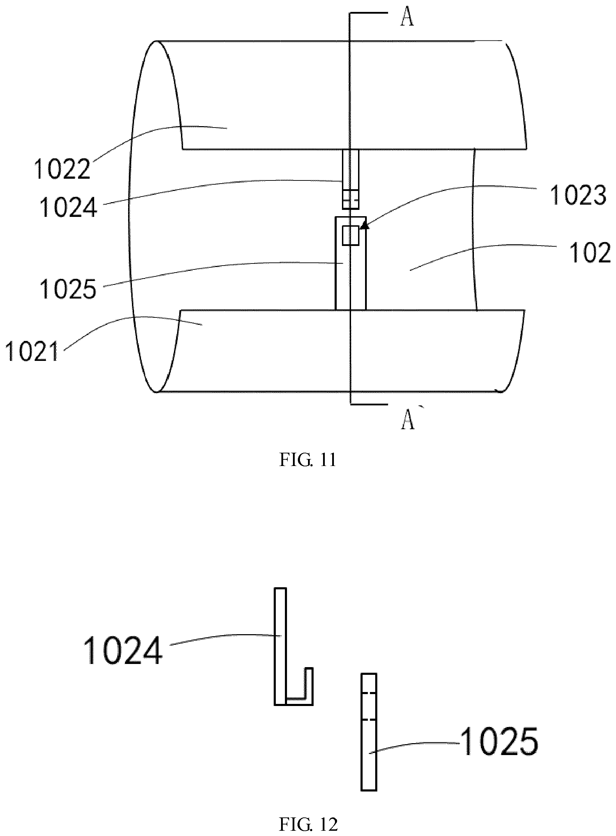

Referring to FIG 11 and FIG 12, the flexible screen support member 102 includes the first end 1021 and the second end 1022 opposite the first end 1021. Bending of the flexible screen support member 102 enables the first end 1021 and the second end 1022 to be close to each other. The first end 1021 and the second end 1022 are respectively provided with engaging members 1023 that match with each other, enabling the first end 1021 and the second end 1022 to be engaged with each other. Specifically, the engaging member 1023 includes a snap portion 1024 disposed at the first end 1021 and a hook portion 1025 disposed at the second end 1022. The snap portion 1024 and the hook portion 1025 are able to be engaged with each other to realize wearing the light-emitting device 100 on a wrist, so as to prevent part of the light-emitting surface of the flexible screen 101 from being covered when the light-emitting device 100 is held by a hand. Meanwhile, the light-emitting device 100 can be worn on the wrist for illumination, rather than being held by a hand, thereby increasing the portability of the light-emitting device 100. In other embodiments, the engaging member 1023 may also be a magnetic structure or other engaging structure, which is not limited herein.

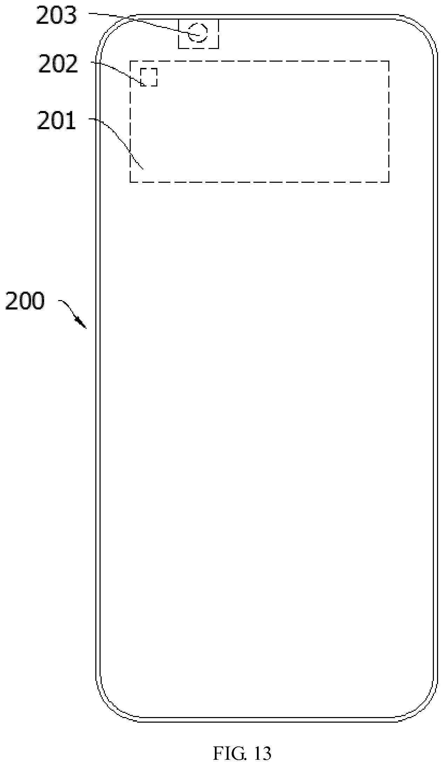

Referring to FIG 1 to FIG 14, FIG 13 illustrates an example mobile terminal 200. The mobile terminal 200 includes the light-emitting device 100 of any of the above embodiments and further includes a bending sensing chip 202 and a mainboard 201. The bending sensing chip 202 and the mainboard 201 are disposed on the flexible screen support member 102. The bending sensing chip 202 and the surface light source 103 are both electrically coupled to the mainboard 201. The bending sensing chip 202 is attached to the flexible screen support member 102. The bending sensing chip 202 can be attached to a surface of the flexible screen support member 102 close to the surface light source 103. Alternatively, the bending sensing chip 202 can be attached to a surface of the flexible screen support member 102 away from the surface light source 103. In other embodiments, the bending sensing chip 202 may also be disposed on the flexible screen 101 or the flexible circuit board 104. The bending sensing chip 202 is configured to sense a bending degree of the flexible screen support member 102, and adjust the strength of an electrical signal to be transmitted to the mainboard 201. The mainboard 201 is configured to adjust the brightness of the surface light source 103 according to the strength of the electrical signal received. Specifically, when the bending degree of the flexible screen support member 102 increases, the mainboard 201 controls increment of the brightness of the surface light source 103, and when the bending degree of the flexible screen support member 102 is reduced, the mainboard 201 controls reduction of the brightness of the light of the surface light source103. Alternatively, when the bending degree of the flexible screen support member 102 increases, the mainboard 201 controls reduction of the brightness of the surface light source 103, and when the bending degree of the flexible screen support member 102 is reduced, the mainboard 201 controls increment of the brightness of the light of the surface light source 103. In this manner, the brightness of the mobile terminal 200 is controlled based on the bending degree of the flexible screen support member 102, thereby improving user experience and facilitating adjustment of the brightness.

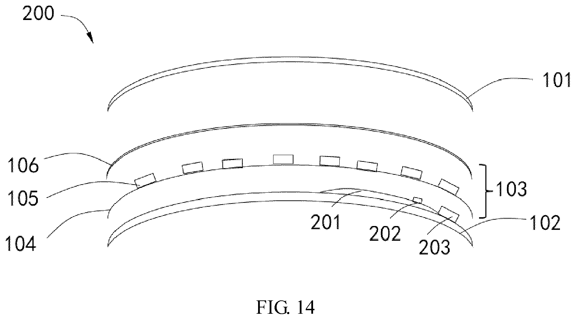

In an embodiment, as illustrated in FIG 14, the mobile terminal 200 further includes a camera module 203. The camera module 203 is disposed on the flexible screen support member 102 and electrically coupled to the mainboard 201. When the camera module 203 is operating in ambient with low brightness, the surface light source 103 is controlled to emit light by the mainboard 201, so as to increase the brightness of the current ambient to meet the requirements of the brightness for self-photographing or photography.

In an embodiment, as illustrated in FIG 14, the camera module 203 can be slidably connected to the flexible screen support member 102. When the camera module 203 is not in use, the flexible screen 101 covers the camera module 203. When the camera module 203 is needed to be used, the camera module 203 slides out of the flexible screen support member 102 for use.

## Claims

1. A light-emitting device (100), comprising:
a flexible screen (101) comprising an exit light surface (1011) and an incident light surface (1012) opposite the exit light surface (1011); and
a surface light source (103) attached to the incident light surface (1012) and configured to emit light passing through the incident light surface (1012) and exiting from the exit light surface (1011);
**characterized in that** the light-emitting device (100) further comprises:
a flexible screen support member (102) comprising a first end (1021) and a second end (1022) opposite the first end (1021), wherein the flexible screen support member (102), the flexible screen (101), and the surface light source (103) are stacked together;
wherein the flexible screen support member (102) is disposed at a side of the surface light source (103) away from the flexible screen (101), or wherein the flexible screen support member (102) is disposed between the surface light source (103) and the flexible screen (101);
bending of the flexible screen support member (102) enables the first end (1021) and the second end (1022) to be close to each other; and
the first end (1021) and the second end (1022) are respectively provided with engaging members (1023) being able to be engaged with each other, enabling the first end (1021) and the second end (1022) to be engaged with each other via the engaging members (1023).

2. The light-emitting device of claim 1, wherein the flexible screen support member (102) is made from a light guide material.

3. The light-emitting device of claim 1 or 2, wherein the surface light source (103) is attached to the flexible screen support member (102).

4. The light-emitting device of any of claims 1 to 3, wherein the flexible screen support member (102) is bendable, and wherein the flexible screen support member (102) is able to be bent to be in one of a C-shape and an S-shape, enabling the flexible screen (101) and the surface light source (103) to be bent to be in one of a C-shape and an S-shape.

5. The light-emitting device of any of claims 1 to 4, wherein the surface light source (103) comprises a flexible circuit board (104) and a plurality of surface-mount device light-emitting diodes (105) attached to the flexible circuit board (104), and wherein the plurality of surface-mount device light-emitting diodes (105) are disposed at a side of the flexible circuit board (104) close to the flexible screen (101).

6. The light-emitting device of claim 5, wherein the surface light source (103) further comprises a light guide plate (106) disposed between the plurality of surface-mount device light-emitting diodes (105) and the incident light surface (1012) of the flexible screen (101).

7. The light-emitting device of claim 6, wherein the light guide plate (106) is bendable, and wherein the light guide plate (106) is bent following bending of the flexible screen support member (102) during bending the flexible screen support member (102).

8. The light-emitting device of claim 6 or 7, further comprising a light-reflecting layer (107) disposed between the flexible screen (101) and the plurality of surface-mount device light-emitting diodes (105), wherein the plurality of surface-mount device light-emitting diodes (105) are configured to emit light, and the light-reflecting layer (107) is configured to reflect part of the light emitted from the plurality of surface-mount device light-emitting diodes (105).

9. A mobile terminal (200), comprising the light-emitting device (100) of any of claims 1 to 8.

## Patentansprüche

1. Lichtemittierende Vorrichtung (100), umfassend:
einem flexiblen Bildschirm (101), umfassend eine Austrittslichtfläche (1011) und eine der Austrittslichtfläche (1011) gegenüberliegende Auflichtfläche (1012); und
eine Flächenlichtquelle (103), die an der Auflichtfläche (1012) angebracht und dazu ausgelegt ist, Licht zu emittieren, das durch die Auflichtfläche (1012) hindurchgeht und aus der Austrittslichtfläche (1011) austritt;
**dadurch gekennzeichnet, dass** die lichtemittierende Vorrichtung (100) ferner umfasst:
ein flexibles Bildschirmträgerelement (102), das ein erstes Ende (1021) und ein dem ersten Ende (1021) gegenüberliegendes zweites Ende (1022) umfasst, wobei das flexible Bildschirmträgerelement (102), der flexible Bildschirm (101) und die Flächenlichtquelle (103) zusammengestapelt sind;
wobei das flexible Bildschirmträgerelement (102) an einer Seite der Flächenlichtquelle (103) entfernt von dem flexiblen Bildschirm (101) angeordnet ist oder wobei das flexible Bildschirmträgerelement (102) zwischen der Flächenlichtquelle (103) und dem flexiblen Bildschirm (101) angeordnet ist;
Biegen des flexiblen Bildschirmträgerelements (102) ermöglicht, dass das erste Ende (1021) und das zweite Ende (1022) nahe beieinander liegen; und
das erste Ende (1021) und das zweite Ende (1022) jeweils mit Eingriffselementen (1023) versehen sind, die miteinander in Eingriff gebracht werden können, wodurch das erste Ende (1021) und das zweite Ende (1022) über die Eingriffselemente (1023) miteinander in Eingriff gebracht werden können.

2. Lichtemittierende Vorrichtung gemäß Anspruch 1, wobei das flexible Bildschirmträgerelement (102) aus einem Lichtleitermaterial hergestellt ist.

3. Lichtemittierende Vorrichtung gemäß Anspruch 1 oder 2, wobei die Flächenlichtquelle (103) an dem flexiblen Bildschirmträgerelement (102) angebracht ist.

4. Lichtemittierende Vorrichtung gemäß einem der Ansprüche 1 bis 3, wobei das flexible Bildschirmträgerelement (102) biegbar ist und wobei das flexible Bildschirmträgerelement (102) so gebogen werden kann, dass es entweder eine C-Form oder eine S-Form aufweist, wodurch der flexible Bildschirm (101) und die Flächenlichtquelle (103) so gebogen werden können, dass sie entweder eine C-Form oder eine S-Form aufweisen.

5. Lichtemittierende Vorrichtung gemäß einem der Ansprüche 1 bis 4, wobei die Flächenlichtquelle (103) eine flexible Schaltplatine (104) und eine Vielzahl von oberflächenmontierten Vorrichtungsleuchtdioden (105) umfasst, die auf der flexiblen Schaltplatine (104) angebracht sind, und wobei die Vielzahl von oberflächenmontierten Vorrichtungsleuchtdioden (105) auf einer Seite der flexiblen Schaltplatine (104) nahe dem flexiblen Bildschirm (101) angeordnet sind.

6. Lichtemittierende Vorrichtung gemäß Anspruch 5, wobei die Flächenlichtquelle (103) ferner eine Lichtleiterplatte (106) umfasst, die zwischen der Vielzahl von oberflächenmontierten Vorrichtungsleuchtdioden (105) und der Auflichtfläche (1012) des flexiblen Bildschirms (101) angeordnet ist.

7. Lichtemittierende Vorrichtung gemäß Anspruch 6, wobei die Lichtleiterplatte (106) biegbar ist und wobei die Lichtleiterplatte (106) beim Biegen des flexiblen Bildschirmträgerelements (102) nach dem Biegen des flexiblen Bildschirmträgerelements (102) gebogen wird.

8. Lichtemittierende Vorrichtung gemäß Anspruch 6 oder 7, ferner umfassend eine lichtreflektierende Schicht (107), die zwischen dem flexiblen Bildschirm (101) und der Vielzahl von oberflächenmontierten Vorrichtungsleuchtdioden (105) angeordnet ist, wobei die Vielzahl von oberflächenmontierten Vorrichtungsleuchtdioden (105) dazu ausgelegt ist, Licht zu emittieren, und die lichtreflektierende Schicht (107) dazu ausgelegt ist, einen Teil des aus der Vielzahl von oberflächenmontierten Vorrichtungsleuchtdioden (105) emittierten Lichts zu reflektieren.

9. Mobiles Endgerät (200), umfassend die lichtemittierende Vorrichtung (100) gemäß einem der Ansprüche 1 bis 8.

## Revendications

1. Dispositif luminescent (100), comprenant :
un écran flexible (101) comprenant une surface de lumière de sortie (1011) et une surface de lumière incidente (1012) opposée à la surface de lumière de sortie (1011) ; et
une source de lumière de surface (103) attachée à la surface de lumière incidente (1012) et configurée pour émettre de la lumière passant à travers la surface de lumière incidente (1012) et sortant de la surface de lumière de sortie (1011) ;
**caractérisé en ce que** le dispositif luminescent (100) comprend en outre :
un élément de support d'écran flexible (102) comprenant une première extrémité (1021) et une seconde extrémité (1022) opposée à la première extrémité (1021), dans lequel l'élément de support d'écran flexible (102), l'écran flexible (101), et la source de lumière de surface (103) sont empilés ensemble ;
dans lequel l'élément de support d'écran flexible (102) est disposé sur un côté de la source de lumière de surface (103) éloigné de l'écran flexible (101), ou dans lequel l'élément de support d'écran flexible (102) est disposé entre la source de lumière de surface (103) et l'écran flexible (101) ;
la flexion de l'élément de support d'écran flexible (102) permet à la première extrémité (1021) et la seconde extrémité (1022) d'être près l'une de l'autre ; et
la première extrémité (1021) et la seconde extrémité (1022) sont respectivement pourvues d'éléments de mise en prise (1023) capables d'être mis en prise l'un avec l'autre, permettant à la première extrémité (1021) et la seconde extrémité (1022) d'être mises en prise l'une avec l'autre par l'intermédiaire des éléments de mise en prise (1023).

2. Dispositif luminescent selon la revendication 1, dans lequel l'élément de support d'écran flexible (102) est fait d'un matériau guide lumière.

3. Dispositif luminescent selon la revendication 1 ou 2, dans lequel la source de lumière de surface (103) est attachée à l'élément de support d'écran flexible (102).

4. Dispositif luminescent selon l'une quelconque des revendications 1 à 3, dans lequel l'élément de support d'écran flexible (102) est fléchissable, et dans lequel l'élément de support d'écran flexible (102) est capable d'être fléchi pour être dans une d'une forme de C et d'une forme de S, permettant à l'écran flexible (101) et la source de lumière de surface (103) d'être fléchis pour être dans un d'une forme de C et d'une forme de S.

5. Dispositif luminescent selon l'une quelconque des revendications 1 à 4, dans lequel la source de lumière de surface (103) comprend une carte de circuit imprimé flexible (104) et une pluralité de diodes électroluminescentes de dispositif pour montage en surface (105) attachées à la carte de circuit imprimé flexible (104), et dans lequel la pluralité de diodes électroluminescentes de dispositif pour montage en surface (105) sont disposées sur un côté de la carte de circuit imprimé flexible (104) près de l'écran flexible (101).

6. Dispositif luminescent selon la revendication 5, dans lequel la source de lumière de surface (103) comprend en outre une plaque guide-lumière (106) disposée entre la pluralité de diodes électroluminescentes de dispositif pour montage en surface (105) et la surface de lumière incidente (1012) de l'écran flexible (101).

7. Dispositif luminescent selon la revendication 6, dans lequel la plaque guide-lumière (106) est fléchissable, et dans lequel la plaque guide-lumière (106) est fléchie suivant la flexion de l'élément de support d'écran flexible (102) durant la flexion de l'élément de support d'écran flexible (102).

8. Dispositif luminescent selon la revendication 6 ou 7, comprenant en outre une couche réfléchissant la lumière (107) disposée entre l'écran flexible (101) et la pluralité de diodes électroluminescentes de dispositif pour montage en surface (105), dans lequel la pluralité de diodes électroluminescentes de dispositif pour montage en surface (105) sont configurées pour émettre de la lumière, et la couche réfléchissant la lumière (107) est configurée pour réfléchir une partie de la lumière émise à partir de la pluralité de diodes électroluminescentes de dispositif pour montage en surface (105).

9. Terminal mobile (200), comprenant le dispositif luminescent (100) de l'une quelconque des revendications 1 à 8.
